# EUROPEAN PATENT SPECIFICATION

(11) **EP 2 191 108 B1**
(45) Date of publication and mention of the grant of the patent: **23.03.2011**
(21) Application number: 08795647.0
(22) Date of filing: 27.08.2008
(51) Int. Cl.: F01N 3/022

(54) **FILTER MEDIA AND METHOD OF FILTERING EXHAUST GAS**
ABGASFILTER UND VERFAHREN ZUM FILTERN VON ABGAS
FILTRE DE GAZ D'ÉCHAPPEMENT ET METHODE DE FILTRATION DE GAZ D'ECHAPPEMENT

(30) Priority: 31.08.2007 US 896386
(43) Date of publication of application: 02.06.2010
(73) Proprietor: Perkins Engines Company Limited, Eastfield Peterborough PE1 5NA (GB)
(72) Inventor: BAZYN, Timothy, A., Peoria, IL 61629-9510 (US); HEATON, David M., Peoria, IL 61629-9510 (US); SOILLEUX, Jason L., Peoria, IL 61629-9510 (US)
(74) Representative: Preuss, Udo
(86) International application number: PCT/US2008/010173
(87) International publication number: WO 2009/032142

(56) References cited:
- WO-A-03/014539
- WO-A-2007/074808
- FR-A- 2 879 236
- JP-A- 2002 119 867
- US-A- 4 519 820

## Description

### Technical Field

The present disclosure relates generally to a partial flow filter, and more particularly, to a partial flow exhaust filter.

### Background

Internal combustion engines exhaust a complex mixture of chemical species as a byproduct of the combustion process. In diesel engines, the condensed phase chemical species are composed of three main fractions, namely, elemental carbon and inorganic ash (solid), soluble organic fraction (SOF and liquid), and sulphate particulates (liquid). Due to heightened environmental concerns, exhaust emission standards have become increasingly stringent over the years. As part of these emission standards, regulations prescribe the amount of chemical species that can be emitted from an engine depending on the type, size, and/or class of the engine. One method used by engine manufacturers to comply with these regulations is to remove the offending chemical species from the exhaust flow of the engine. Different techniques are typically used to remove solid phase and gaseous phase chemical species from the exhaust flow. One common method used to remove solid phase (and to some extent, liquid phase) particulate matter contained in the exhaust is to capture and oxidize these particulate matter using diesel particulate filters (DPF).

DPF's are typically located along the path of the exhaust flow and they operate by forcing the exhaust flow through a filter media of the DPF. There are many types of filter media that have been used in DPF's. Ceramic wall-flow monoliths are by far the most common type of filter elements used in DPF's. A ceramic wall-flow filter element has parallel channels (called "honeycomb" structure) alternately plugged at each end in order to force the exhaust, gases through the porous ceramic walls. That is, channels that are exposed at the inlet end (called "inlet channels") are plugged at the outlet end, and channels that are plugged at the inlet end (called "outlet channels") are exposed at the outlet end. Therefore, exhaust gases that enter the inlet channels at the inlet end are forced to percolate through the walls of the filter element to the outlet channels in order to exit the filter element. Thus, the walls of the filter media act as a filter. These filter elements are commonly made of ceramic materials, such as cordierite (a synthetic ceramic composition having the formula 2MgO-2Al₂O₃-5SiO₂), that are characterized by good porosity, high temperature resistance and good mechanical strength. The ceramic walls of the filter media block some or all of the particulate matter in the exhaust while allowing the exhaust gases to flow through. Over time, the particulate matter may clog the filter media, impeding the flow of gas through it, resulting in increased pressure drop across the filter (engine back pressure) and reduced engine efficiency. Filter regeneration is one way to remove the particulate build up within the filter media. Regeneration is the process of increasing the temperature of the filter media until the organic components of the particulate matter such as the soot and the soluble organic fraction (SOF) that accumulates in the filter media oxidize. The regeneration process exposes the filter media to large temperature cycles that negatively impact the durability of the filter media.

WO 03/014539 A1 discloses an exhaust gas purification device having first and second channels with partitions of porous material separating adjacent first and second channels. In one embodiment, both the first channels and the second channels are open at an inlet side and an outlet side. The end portions of adjacent partitions are partially connected to each other such that the end portions are tapered toward the outside of the exhaust gas purification device. The cross-sectional shapes of the first and second channels are essentially equal, and due to the tapered end portions on both the inlet side and the outlet side the flow volumes and flow velocities in the first and second channels are probably the same. Another embodiment shown in WO 03/014539 A1 includes first channels closed at the outlet side.

US-4,519,820 shows a filter apparatus having a honeycomb structure with first and second channels. The first channels are open at an inlet end and closed at an outlet end. The cross-sectional shapes of the first and second channels are probably essentially equal. A very similar device is shown in WO 03/014539 A1.

WO 2007/074808 A1 discloses a simple honeycomb structure having additional sealing portions.

FR 2 879 236 shows a particulate filter having first and second channels with different cross-sectional shapes. The second channels have a cross-sectional area much smaller than the cross-sectional area of the first channels.

U.S. Patent No. 4,417,908 (the '908 patent) to Pitcher, Jr. describes a honeycomb filter element that decreases the back pressure generated by the filter without sacrificing filtration efficiency. The filter media of the '908 patent reduces backpressure by increasing the number of inlet channels as opposed to the outlet channels. The increased number of inlet channels increases the surface area of the inlet channel walls through which the exhaust gases can percolate into the outlet channels. The increased surface area delays clogging of filter media and hence, pressure build up.

While the filter media of the '908 patent may delay back pressure buildup, the accumulating soot in the filter media may eventually increase back pressure and require regeneration to maintain engine efficiency. By increasing the surface area available for soot accumulation, the filter element of the '908 patent may increase the quantity of soot that has to be burned off during regeneration. This increased quantity of soot burned during regeneration may increase the high temperature exposure and the temperature gradients in the filter element, thereby negatively impacting its durability. The present disclosure is directed to solving one or more of the problems set forth above.

### Summary of the Invention

In one aspect, a filter media is disclosed. The filter media includes a plurality of channels separated by porous sidewalls extending longitudinally from a first end to a second end. The plurality of channels includes a plurality of first channels and a plurality of second channels. The first channels are open at both the first end and the second end and have a first width. The second channels are closed at the first end and open at the second end and have a second width greater than the first width. The first width is the largest width of the cross-section of the first channels, and the second width is the largest width of the cross-section of the second channels. In addition, the first channels have a substantially rectangular cross-sectional shape and the second channels have a substantially octagonal cross-sectional shape.

In another aspect, a method of filtering exhaust gas of an internal combustion engine is disclosed. The method includes directing the exhaust gas into a first channel extending from an inlet end to an outlet end. The first channel has a first cross-sectional area and is open at both the inlet end and the outlet end. A cross-sectional shape of the first channel is substantially rectangular and a cross-sectional shape of the second channel is substantially octagonal. The method also includes passing a first portion of the exhaust gas into a second channel. The second channel is adjacent to the first channel and has an inlet end and an outlet end. The second channel is closed at the inlet end and open at the outlet end and has a second cross-sectional area greater than the first cross-sectional area. The method further includes directing the first portion of the exhaust gas out of the outlet end of the second channel, and directing a portion of the exhaust gas out of the outlet end of the first channel.

### Brief Description of the Drawings

FIG. 1 is an illustration of an exemplary disclosed engine system;
FIG. 2 is a cut away illustration of the diesel particulate filter (DPF) of FIG. 1 not forming part of the invention;
FIG. 3 is an illustration of an embodiment of the filter media of the DPF of FIG. 1 not forming part of the invention;
FIG. 4 is a cross-sectional illustration of the DPF of FIG. 1 not forming part of the invention;
FIG. is an illustration of a magnified view of the filter media of the DPF of FIG. 1 not forming part of the invention;
FIGS. 6A-6D are illustrations of an embodiment of the filter media of the present invention of the DPF of FIG. 1;
FIG. 7A illustrates the flow fraction filtered as a function of orifice size in an embodiment of the filter media of the DPF of FIG. 1; and
FIG. 7B illustrates the pressure drop as a function of orifice size in an embodiment of the filter media of the DPF of FIG. 1.

### Detailed Description

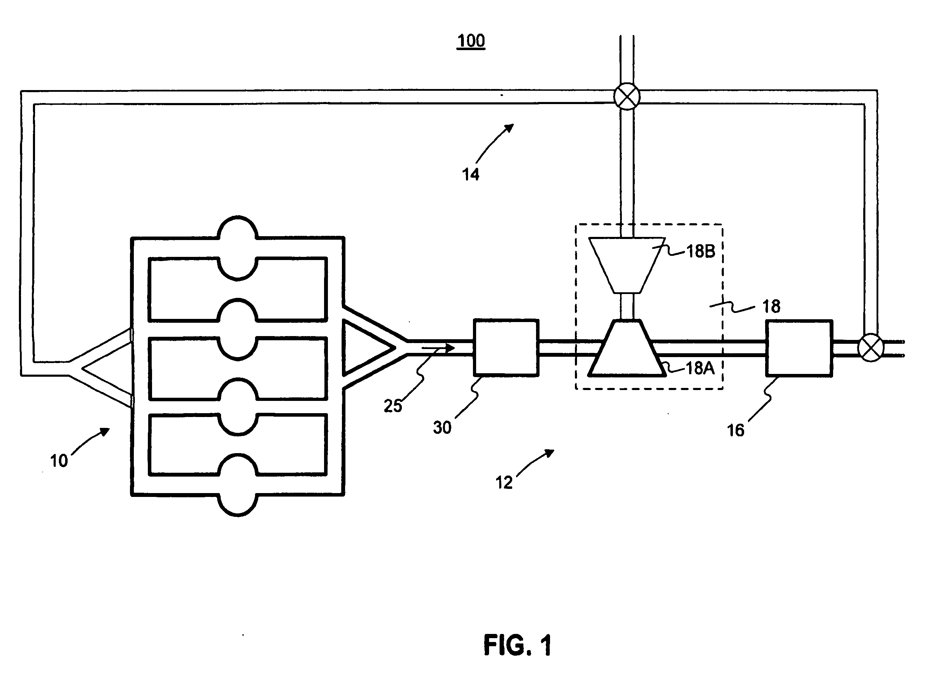

FIG. 1 illustrates an engine system 100. Engine system 100 may have, among other systems, a power source 10, and an induction system 14, and an exhaust system 12. Power source 10 may include an engine such as, for example, a diesel engine, a gasoline engine, a natural gas engine, or any other engine apparent to one skilled in the art. Fuel may be combusted in power source 10 to produce mechanical power. Combustion of the fuel may produce exhaust gas 25. The exhaust gas 25 may be exhausted to the atmosphere through the exhaust system 12.

Induction system 14 may be configured to introduce compressed air into a combustion chamber (not shown) of power source 10. Induction system 14 may include components configured to introduce compressed air and fuel into the power source. These components may include any components known in the art such as, valves, air coolers, air cleaners, control system, etc.

Exhaust system 12 may be configured to direct hot exhaust gas 25 from power source 10 to the atmosphere. Exhaust system 12 may include components that are configured to extract power from exhaust gas 25. These components may include a turbocharger 18. Turbocharger 18 may consist of a turbine 18A connected to a compressor 18B by a shaft. The turbine 18A may receive exhaust gas 25 from the power source 10 causing a turbine wheel to rotate. This rotation may drive the compressor 18B, compressing air in induction system 14.

Exhaust gas 25 may also contain solid particulate matter and various chemicals in liquid or gaseous form. The solid particulate matter may include combustible organic constituents (such as elemental carbon) and incombustible inorganic constituents (such as ash). Some of the exhaust gas constituents may be regulated by regulatory agencies, and hence may need to be removed/reduced before exhaust gas 25 is released to the atmosphere. Exhaust system 12 may include components that may be configured to separate these regulated constituents from exhaust gas 25. These components may include, among others, one or more filters. These filters may include a diesel particulate filter (DPF) 30, and a catalytic converter 16.

Catalytic converter 16 may be a device configured to chemically convert some of the constituents of exhaust gas into less harmful constituents. For example, catalytic converter 16 may reduce oxides of nitrogen in exhaust gas 25 to nitrogen and oxygen, oxidize carbon monoxide in exhaust gas 25 to less harmful carbon dioxide, and oxidize un-burnt hydrocarbons in exhaust gas 25 to carbon dioxide and water. Catalytic converter may include a substrate through which exhaust gas 25 may be flown through. The substrate may include a catalyst deposited thereon, to facilitate the oxidation and reduction reactions. Although FIG. 1 depicts catalytic converter 16 to be located downstream of turbocharger 18 and DPF 30 to be located upstream of the turbocharger 18, in general, catalytic converter 16 and DPF 30 may be located either upstream or downstream of turbocharger 18. Catalytic converter 16 may typically be located downstream of DPF 30. However, it is contemplated that other arrangements are possible.

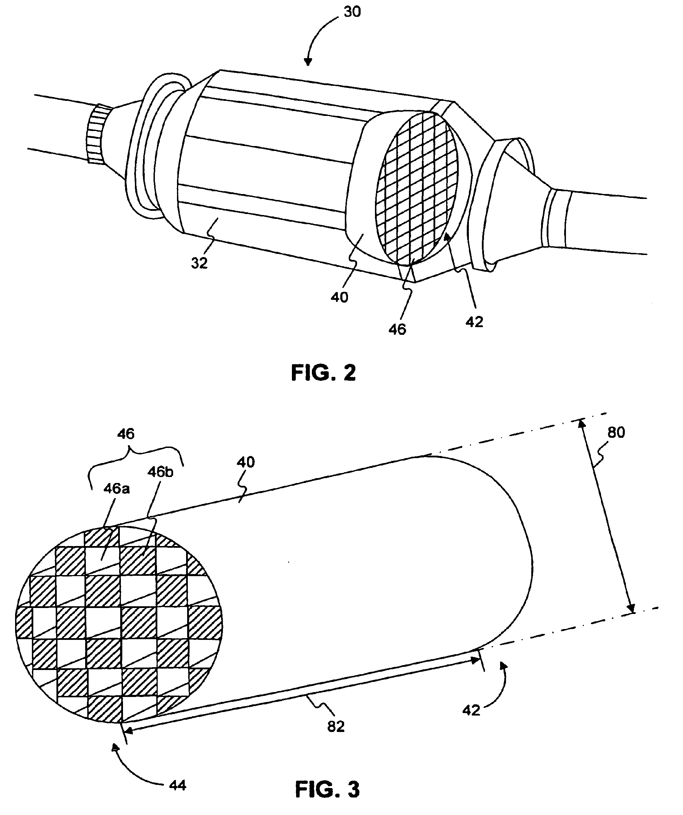

DPF 30 may separate some of the solid and liquid particulate matter ("particulate matter") from exhaust gas 25. FIG. 2 illustrates a cutaway view of DPF 30. DPF 30 may include a housing 32 enclosing a filter media 40. Although a cylindrical housing is depicted in FIG. 2, housing 32 may be of any shape. Housing 32 may be made of any material, such as steel, that may reliably withstand the temperatures and constituents of exhaust gas 25. In some embodiments, heaters may also be embedded in DPF 30 to heat filter media 40 to regeneration temperature. Filter media 40 may be positioned within housing 32 such that exhaust gas 25 flowing through DPF 30 flows through filter media 40. Exhaust gas 25 may enter filter media 40 at an inlet end 44 and exit filter media 40 at outlet end 42.

Filter media 40 may have a porous structure. In some embodiments, filter media 40 may be made of a porous material such as cordierite or silicon carbide, while in other embodiments, filter media 40 may be made of a metallic mesh or a metallic foam. The porous nature of filter media 40 may filter some of the particulate matter from the exhaust gas 25 passing through it. Due to this filtering of particulate matter, the particulate matter content of exhaust gas 25 exiting filter media 40 at outlet end 42 may be less than particulate matter content of exhaust gas 25 entering filter media 40 at inlet end 44.

FIG. 3 illustrates an embodiment of filter media 40 according to the prior art. Filter media 40 may have a cylindrical shape, with length 82 and diameter 80 suited to fit within the cylindrical DPF housing 32. However, other shapes of filter media 40 are also contemplated. Length 82 and diameter 80 may have any value depending upon the application. Filter media 40 may include multiple parallel channels 46 running in a longitudinal direction. Alternating adjacent channels 46 may be plugged at the inlet end 44 of filter media 40 to create inlet channels 46a and outlet channels 46b. Inlet channels 46a may be channels 46 with the inlet end 44 open and outlet channels 46b may be channels 46 with the inlet end 44 plugged. Inlet channels 46a and outlet channels 46b may together create a checker board pattern of channels 46 at inlet end 44.

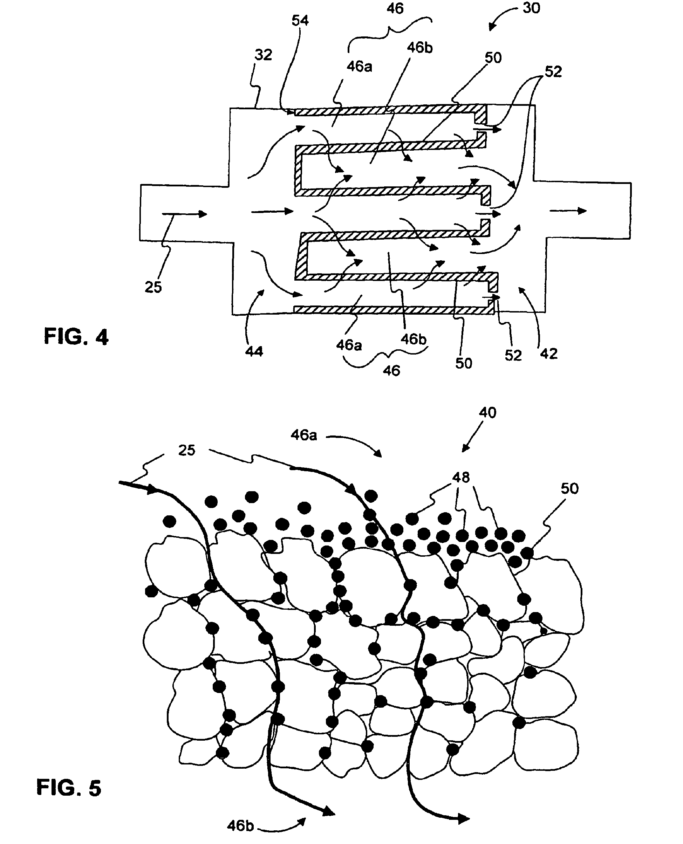

FIG. 4 shows a cross-sectional view of DPF 30 showing filter media 40 according to the prior art. Inlet channel 46a and outlet channels 46b may be separated by porous side walls having thickness 54. Outlet channels 46b may have their outlet ends 42 open. Inlet channels 46a, on the other hand, may have their outlet end 42 plugged. Some of the plugged outlet ends 42 of inlet channels 46a may have an orifice 52 associated therewith. Orifice 52 may be an opening that may fluidly connect inlet channel 46a to the down stream side of DPF 30. In some embodiments, orifice 52 may be included in the plugged outlet ends 42 of all inlet channels 46a. While in other embodiments, orifice 52 may only be included in the plugged outlet ends 42 of selected inlet channels 46a. For instance, every alternate inlet channel 46a. Orifice 52 may be a substantially circular opening in some embodiments, while in other embodiments, orifice 52 may have other shapes. The size of orifice 52 may vary with application and the desired filter performance. In some embodiments, orifice 52 may be a small opening while in other embodiments, orifice 52 may occupy the entire outlet end 42 of an inlet channel 46a. In these embodiments, the outlet end 42 of inlet channels 46a may also be open like the outlet end of outlet channels 46b. It is also contemplated that, in some embodiments, orifice 52 included in different inlet channels may have different sizes. For instance, the size of an orifice 52 may be function of its distance from the center of the filter media 40. Some of the factors that may determine the size of orifice 52 will be described more in subsequent paragraphs.

Exhaust gas 25 enters inlet channels 46a of filter media 40 at the inlet end 44. Some exhaust gas 25 may also enter outlet channel 46b through porous walls of plugged inlet end 44 of outlet channel 46b. A portion of exhaust gas 25 in the inlet channels 46a may percolate into the outlet channels 46b through the porous side walls 50 of inlet channel 46a. Orifice 52 at the outlet end 42 of inlet channel 46a may restrict the free flow of exhaust gas 25 through inlet channel 46a. This restriction to the flow may also force an additional portion of exhaust gas 25 through the porous side walls 50 into outlet channels 46b. The remaining portion of exhaust gas 25 may exit inlet channels 46a through orifice 52. Decreasing thickness 54 of side wall 50 may increase the portion of exhaust gas 25 that percolates into outlet channels 46b. Increasing size of orifice 52 may also decrease the portion of exhaust gas 25 that is forced through side walls 50.

FIG. 5 is an illustration of a magnified view of side wall 50 of filter media 40 of the prior art. When exhaust gas 25 percolates through the porous side walls 50 of inlet channels 46a, some of particulate matter 48 is filtered by side walls 50. This filtration may be the result of a number of mechanisms. In some embodiments, mean pore size of filter media 40 may be smaller than a mean size of particulate matter 48. In these embodiments, the filter media 40 may only allow exhaust gas 25 to pass through its pores while blocking larger particulate matter 48. Thus, particulate matter 48 may be deposited on side walls 50 through sieving. As particulate matter 48 builds up on side wall 50, the accumulated particulate matter 48 may also filter exhaust gas 25 leading to more particulate matter accumulation. In some embodiments of filter media 40, the mean pore size of filter media 40 may be larger than the mean diameter of particulate matter 48. In these embodiments, particulate matter 48 may be deposited on side walls 50 through a combination of depth filtration mechanisms which are driven by various force fields. For example, the force fields may be related to velocity or concentration gradients of exhaust gas 25.

A portion of particulate matter 48 present in exhaust gas 25 may, thus, be filtered while percolating through side walls 50 of filter media 40. The remaining portion of particulate matter 48 may pass through DPF 30 along with the portion of exhaust gas 25 exiting filter media 40 through orifice 52. A ratio of the amount of particulate matter 48 filtered by filter media 40 to the total amount of particulate matter 48 present in exhaust gas 25 may be a measure of filtration efficiency of DPF 30. The portion of particulate matter 48 escaping with exhaust gas 25 passing through orifice 52 may contribute to a reduction in filtration efficiency of DPF 30. The amount of exhaust gas 25 flowing through orifice 52, and the amount of escaping particulate matter 48 may increase with size of orifice 52. Therefore, filtration efficiency may decrease with orifice size.

As particulate matter 48 accumulates in filter media 40, the resistance to exhaust flow through DPF 30 may increase. This resistance to exhaust flow may, in turn, increase the pressure of exhaust gas 25 in filter media 40 ("back pressure"). The increase in back pressure may adversely affect the performance of power source 10. Continued accumulation of particulate matter 48 may eventually clog the pores of side walls 50 thereby preventing further percolation of exhaust gas 25 through side walls 50. The increase in back pressure associated with clogging may in some instances cause catastrophic failure of exhaust system 12. The ability of exhaust gas 25 to exit filter media 40 through orifice 52, may however, prevent catastrophic failure of exhaust system 12.

When the back pressure, resulting from particulate matter 48 build up in DPF 30, affects engine performance, DPF 30 may be regenerated. Regeneration is the process of oxidizing (that is, burning) a part of the particulate matter 48 accumulated in the filter media 40. During regeneration, the combustible portion of the accumulated particulate matter 48 may be oxidized to carbon dioxide or carbon monoxide. Oxidation of the combustible part of particulate matter 48 may occur at a regeneration temperature between about 550°C and 650°C or by the oxidation of carbon by NO₂ at a temperature above about 225°C. In some embodiments, this regeneration temperature may be decreased using a catalyst. The accumulated particulate matter may be heated to the regeneration temperature using a variety of ways. In some embodiments, a heater embedded in DPF 30 or filter media 40 may be used to raise the temperature of accumulated particulate matter 48. In some embodiments, the temperature of the exhaust gas 25 may be increased when a regeneration event is triggered. The temperature of exhaust gas 25 may be increased in a number of ways. For instance, a regeneration assist system (not shown) located upstream of DPF 30 may be used to heat exhaust gas 25.

A regeneration event may be triggered depending upon the amount of accumulated particulate matter 48 in DPF 30. In some embodiments, the amount of accumulated particulate matter 48 may be directly measured (for instance, by using a RF measuring device), while in other embodiments, a threshold value of back pressure may trigger regeneration. During uncontrolled regeneration, the combustible portion of accumulated particulate matter 48 burns, resulting in a rapid increase in temperature, sometimes exceeding 650°C. Due to non-uniform deposition of particulate matter 48 on filter media 40, the temperature of some regions of filter media 40 may be significantly higher than other regions causing a large temperature gradient in filter media 40 during regeneration. These high temperatures and temperature gradients may result in filter media 40 damage. In some applications, filter media 40 may be cooled during regeneration by the stream of exhaust gas 25. Increasing amounts of accumulated particulate matter 48 in filter media 40 may increase the temperature and duration of regeneration. The ability of exhaust gas 25 to cool filter media 40 during regeneration may also be compromised by increasing particulate matter 48 build up. The portion of particulate matter 48 exiting filter media 40 may decrease the accumulation of particulate matter 48 in filter media 40, thereby decreasing the possibility of filter damage during regeneration and decreasing the frequency at which regeneration may be required.

Regeneration clears accumulated particulate matter 48 from filter media 40 by converting them into gaseous compounds. The incombustible portion of particulate matter 48 (for example, ash), however, does not get removed by regeneration. This portion of particulate matter 48 gets removed from filter media 40 along with the portion of exhaust gas 25 passing through orifice 52. Increasing size of orifice 52 allows this incombustible particulate matter 48 to be removed from filter media 40 easily.

Therefore, increasing filtration efficiency (that is, reducing the amount of particulate matter released from DPF 30) may favor a small orifice 52. While lower back pressure, lower regeneration temperature and duration, lower frequency of regeneration, and lower ash buildup in the DPF 30 may favor a larger orifice 52 size. The choice of orifice size in an application may, thus, involve a tradeoff between these and other factors. In general, orifice size may vary from a smallest size that may be reliably produced in filter media 40 to the size of inlet channel 46a.

In general, decreased side wall thickness 54 may increase filtration efficiency. However, the strength of the filter media 40 may be adversely affected. Decreasing side wall thickness may also increase cost and complexity of fabrication. In general, any side wall thickness 54 may be used in an application. Side wall thickness 54 selected for an application may depend on performance, strength, cost, and other factors.

The size of inlet channel 46a, outlet channel 46b, and side wall thickness 54 may also depend on the application. In some embodiments, inlet channels 46a and outlet channels 46b may be substantially equally sized. The size of these channels may also be designed to achieve the required filtration efficiency while reducing back pressure and regeneration temperature. In some embodiments, inlet channel 46a and/or outlet channel 46b may be tapered. That is, the width of these channels may vary along a length of the channel.

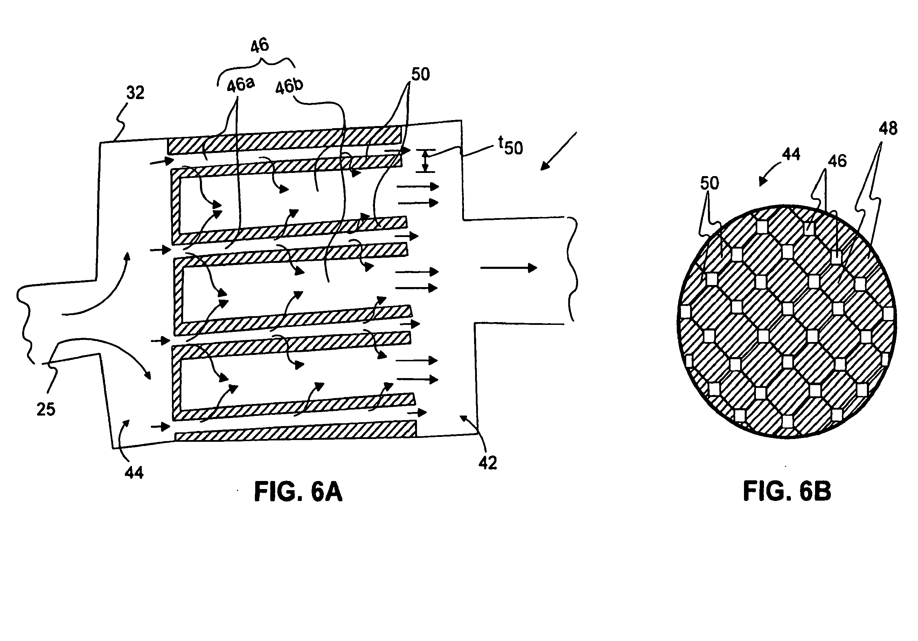

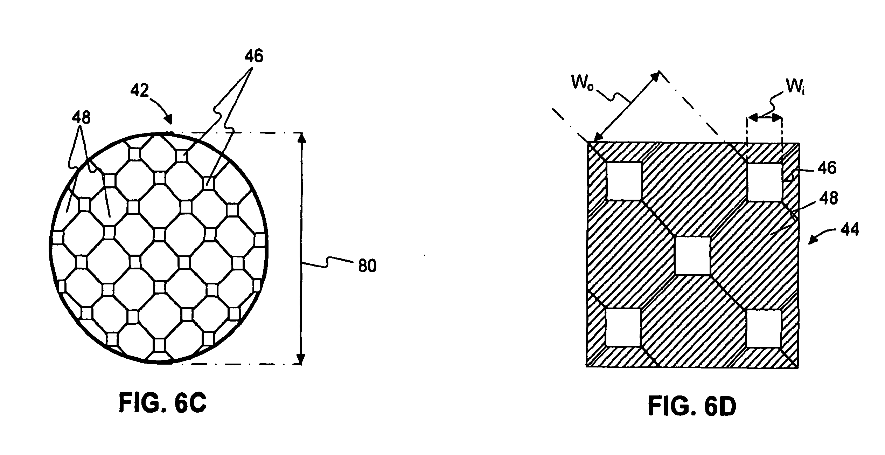

FIGS. 6A-6D illustrates an embodiment of filter media 40 according to the invention. FIG. 6A shows a cross-sectional view of filter media 40 of this embodiment, while FIGS. 6B and 6C shows side views of inlet end 44 and outlet end 42, respectively. FIG. 6D shows a magnified view of the inlet end 44. In the description below, reference is made to FIGS. 6A-6D. In the embodiment depicted in FIGS. 6A-6D, the outlet ends 42 of input channels 46a may be open (see FIGS. 6A and 6C) or partially open with a similar orifice as discussed previously. The size of inlet channel 46a may also smaller than the size of the outlet channel 46b. The inlet channel 46a may have a substantially rectangular shape, while outlet channel 46b may have a substantially octagonal shape (see FIGS. 6B-6D). In this disclosure, substantially rectangular shape is used generally to represent any quadrilateral shape (such as, rectangle, square, rhombus, parallelogram, trapezoid, irregular quadrilateral, etc.), and substantially octagonal shape is used generally to represent any eight sided shape (for example, regular octagon, irregular octagon, etc.). These sides may intersect each other at a sharp point or a curve. The width of a side of inlet channel 46a may be wᵢ. This width wᵢ may be defined as the size of inlet channel 46a. The distance between opposite walls of the octagonal outlet channel 46b may be wₒ. This width wₒ may be defined as the size of outlet channel 46b. Widths wᵢ and wₒ may have any value. It should be pointed out that, due to the geometrical arrangement of inlet and outlet channels, when width wₒ is √2 times wᵢ, the octagon shape of outlet channels may collapse into a square shape. Thus, when wₒ = (√2 x wᵢ), the geometrical arrangement of inlet and outlet channels of this embodiment may resemble the arrangement depicted in FIG. 3. In embodiments with tapered channels, inlet channel width wᵢ and/or outlet channel width wₒ may vary along the length of length of the channel.

As shown in FIG. 6A, exhaust gas 25 may enter the inlet channel 46a at inlet end 44 and travel down the length of the channel towards outlet end 42. The pressure of the exhaust gas in the channel may force a portion of exhaust gas 25 to percolate into adjacent outlet channels 46b through side wall 50. As described earlier, particulate matter 48 may be separated from exhaust gas 25 as it passes through side wall 50. A portion of particulate matter 48 may also escape filter media 40 through the open outlet ends 42 of inlet channels 46a. A larger proportion of exhaust gas 25 percolating into outlet channels 46b may increase the particulate matter 48 filtered by filter media 40. Reducing the size of inlet channel 46a may force more exhaust gas 25 into outlet channels 46b, and thus increase filtration efficiency. However, back pressure may increase with decreasing inlet channel 46a size. Decreasing size of inlet channels 46a may also increase manufacturing complexity and therefore, cost. The inlet channel 46a and outlet channel 46b size in an embodiment may involve a tradeoff between the afore mentioned factors, and depend on the application. In some embodiments, the sizes of inlet channel 46a and outlet channel 46b may be such that wₒ is approximately equal to 1.7 to 2 times wᵢ (that is, w₀ ≈ (1.7 to 2) x wᵢ). While computational fluid dynamic (CFD) simulations indicate that filter media 40 may have desirable characteristics when the ratio wₒ/wᵢ equals to about 1.7 to 2, it is contemplated that inlet and outlet channels 46a, 46b may have other sizes. In some embodiments, some of the particulate matter that escapes DPF 30 may be captured by other filters downstream of DPF 30.

### Industrial Applicability

The disclosed embodiments relate to a partial flow filter to separate particulate matter from engine exhaust. The filter includes a porous filter media with multiple parallel channels running from an inlet end to an outlet end. Alternate adjacent channels of the filter media are plugged at the inlet end of the filter. These plugged channels may be open at the outlet end of the filter media. Some or all of the channels which are not plugged at the inlet end may include an orifice at the outlet end. The size of the orifice may be small or may be as large as the size of the channel. The size of the channels may also vary. Exhaust from an engine may be passed through the filter. These exhaust may enter the channels of the filter media that are open at the inlet end (inlet channels). Due to the pressure of exhaust gas in the inlet channel, some of the exhaust gas may percolate into the adjacent channels through the porous walls of the channel. During percolation through these porous walls, particulate matter contained in the exhaust may be filtered. The decreasing size of the inlet channels and/or decreasing size of the orifice may increase the amount of particulate matter filtered by the filter media and improve filter efficiency. However, small orifices and small inlet channels may increase the back pressure of filter and negatively affect engine efficiency. Therefore, the selection of orifice size and channel size in an application may involve application specific factors. To illustrate an application of the disclosed partial flow filter, an exemplary embodiment will now be described.

A diesel engine exhaust may be directed to a DPF 30. The DPF 30 may contain a cylindrical filter media 40. Filter media 40 may be made of a cordierite ceramic having a porosity of 38% and a micron hole size of 11. Filter media 40 have a diameter 80 of about 7.5 inches and a length 82 of about 8 inches. Filter media 40 may include multiple parallel channels 46 running from an inlet end 44 to an outlet end 42. Each channel 46 may be separated from adjacent channels by a wall having thickness 54 of about 0.012 inches. Alternate adjacent channels of filter media 40 may be plugged at inlet end 44 to create a checker board pattern of channels (as seen in FIG. 3) at inlet end 44. These channels are referred as outlet channels 46b. The outlet channels 46b may be open at outlet end 42 of filter media 40. The channels 46 that are open at inlet end 44 (referred to as inlet channels 46a) may have an orifice 52 at the outlet end 42. These inlet channels 46a may have a square cross-section with a width wᵢ of about 1.5mm. The outlet channels 46b may have an octagonal cross-section, as illustrated in FIG. 6A-6D, with width wₒ being about 3mm.

Parametric CFD simulations were carried out on filter media 40 to determine the impact of orifice size on filter performance parameters. Keeping all variables of filter media 40 constant, orifice diameter was varied in each simulation. The ratio of the amount of exhaust flow percolating through side walls 50 to the total exhaust flow into DPF ("flow fraction filtered"), and the pressure drop across filter media 40, were recorded in each case. Increasing values of flow fraction filtered may indicate increased particulate matter 48 filtration, and therefore, increased filtration efficiency. While increasing values of pressure drop across filter media 40 may indicate increasing back pressure, and therefore, decreasing engine performance.

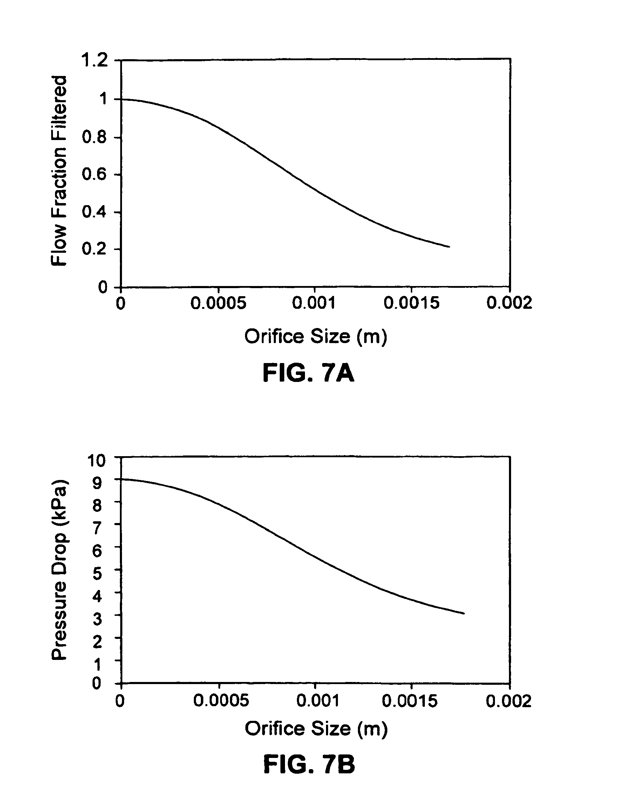

FIGS. 7A and 7B illustrate the impact of orifice size on flow fraction filtered by, and pressure drop across, filter media 40. At an orifice size of "0" (that is, the outlet end of inlet channels 46a are closed) all the exhaust may be forced to percolate through side walls 50. Thus, flow fraction filtered may be "1" (as indicated by FIG. 7A), when orifice size is "0." FIG. 7B indicates that the corresponding pressure drop across filter media 40 when orifice size is "0" to be 9 kilo Pascals (kPa). The impact on engine performance at a filter pressure drop of 9kPa may be unacceptable for the application. FIG. 7A indicates the flow fraction filtered at the largest orifice size evaluated (when the inlet channel 46a is open at outlet end 42) to be approximately "0.2." That is, when the inlet channel 46a is open at outlet end 42, approximately 20% of exhaust flow percolates through side walls 50. FIG. 7B indicates that the pressure drop associated with such a geometry may be about 3.5Kpa. While this low value of pressure drop through filter media 40 may be attractive, the filtration efficiency associated with 20% of exhaust flow filtration may be unacceptable for some applications.

In between these two extreme cases (that is, the case were orifice size is "0," and the case where the outlet end of inlet channel is open), FIG. 7A indicates that increasing values of orifice size decreases the fraction of exhaust flow filtered. FIG. 7B indicates that the pressure drop across the filter media associated with this decreased amount of flow through the filter walls may also be correspondingly lower. Operating conditions (such as, amount of particulate matter that can be released to the atmosphere) and the efficiency requirements, may indicate acceptable values of flow fraction filtered and pressure drop for an application. Based on these acceptable values, an appropriate orifice size may be chosen.

In some engine applications, complete removal of particulate matter from exhaust flow may not be required. The disclosed filter embodiments may enable the tradeoff of filter efficiency to decrease exhaust back pressure. The disclosed filter elements may be designed to achieve a desired filtration efficiency at a lower value of exhaust back pressure. Since all the exhaust gas flowing through the DPF may not be filtered, the amount of particulate matter accumulation in the filter media may also be lower. This lower particulate matter accumulation may decrease the temperature, temperature gradient, and time of exposure of the filter media to high temperature during regeneration. Lower particulate matter accumulation in the filter media may also decrease the frequency of regeneration, thereby decreasing the number of times the filter media is exposed to regeneration temperature. Since the outlet end of the inlet channels may also include an opening, incombustible particulate matter (ash) may be blown out of the filter media along with the exhaust flow, thereby reducing ash buildup in the filter media. This reduction in ash buildup may delay (or even eliminate) filter service needed to remove the accumulated ash, and thereby prolong filter life.

It will be apparent to those skilled in the art that various modifications and variations can be made to the disclosed partial flow filter. Other embodiments will be apparent to those skilled in the art from consideration of the specification and practice of the disclosed partial flow filter. It is intended that the specification and examples be considered as exemplary only, with a true scope being indicated by the following claims and their equivalents.

## Claims

1. A filter media (40) comprising:
a plurality of channels (46) separated by porous sidewalls (50) extending longitudinally from a first end (44) to a second end (42), the plurality of channels including a plurality of first channels (46a) and a plurality of second channels (46b),
the first channels (46a) being open at both the first end (44) and the second end (42) and having a first width,
the second channels (46b) being closed at the first end (44) and open at the second end (42) and having a second width greater than the first width,
the first width being the largest width of the cross-section of the first channels (46a), and the second width being the largest width of the cross-section of the second channel (46b), and
the first channels (46a) having a substantially rectangular cross-sectional shape and the second channels (46b) having a substantially octagonal cross-sectional shape.

2. The filter media of claim 1, wherein each first channel (46a) is adjacent to a second channel (46b) and separated by the side wall (50).

3. The filter media of claim 1, wherein each first channel (46a) includes an orifice (52).

4. The filter media of claim 1, wherein a ratio of the second width to the first width is greater than about 1.5.

5. A method of filtering exhaust gas (25) of an internal combustion engine (100) comprising:
directing the exhaust gas into a first channel (46a) extending from an inlet end (44) to an outlet end (42), the first channel (46a) having a first cross-sectional area and being open at both the inlet end (44) and the outlet end (42), wherein a cross-sectional shape of the first channel (46a) is substantially rectangular;
passing a first portion of the exhaust gas into a second channel (46b), the second channel (46b) being adjacent to the first channel (46a) and having an inlet end and an outlet end, the second channel (46b) being closed at the inlet end and open at the outlet end, having a second cross-sectional area greater than the first cross-sectional area, and wherein a cross-sectional shape of the second channel (46b) is substantially octagonal;
directing the first portion of the exhaust gas out of the outlet end of the second channel (46b); and
directing a portion of the exhaust gas out of the outlet end (42) of the first channel (46a).

6. The method of claim 5, wherein passing a first portion includes passing a first portion into the second channel (46b) having a width greater than about 1.5 times a width of the first channel (46a).

7. The method of claim 5, wherein directing a portion of the exhaust gas includes directing the portion of exhaust gas out of an orifice (52) at the outlet end (42) of the first channel (46a).

## Patentansprüche

1. Filtermedium (40), mit
mehreren sich in Längsrichtung von einem ersten Ende (44) zu einem zweiten Ende (42) erstreckenden Kanälen (46), die durch poröse Seitenwände (50) getrennt sind, wobei die mehreren Kanäle mehrere erste Kanäle (46a) und mehrere zweite Kanäle (46b) enthalten,
wobei die ersten Kanäle (46a) sowohl am ersten Ende (44) als auch am zweiten Ende (42) offen sind und eine erste Breite haben,
wobei die zweiten Kanäle (46b) am ersten Ende (44) geschlossen und am zweiten Ende (42) offen sind und eine zweite Breite haben, die größer als die erste Breite ist,
wobei die erste Breite die größte Breite des Querschnitts der ersten Kanäle (46a) ist und die zweite Breite die größte Breite des Querschnitts der zweiten Kanäle (46b) ist, und
die ersten Kanäle (46a) einen im Wesentlichen rechteckigen Querschnitt aufweisen und die zweiten Kanäle (46b) einen im Wesentlichen achteckigen Querschnitt aufweisen.

2. Filtermedium nach Anspruch 1, wobei jeder erste Kanal (46a) neben einem zweiten Kanal (46b) liegt und durch die Seitenwand (50) getrennt ist.

3. Filtermedium nach Anspruch 1, wobei jeder erste Kanal (46a) eine Öffnung (52) aufweist.

4. Filtermedium nach Anspruch 1, wobei ein Verhältnis von der zweiten Breite zu der ersten Breite größer als etwa 1,5 ist.

5. Verfahren zum Filtern von Abgas (25) eines Verbrennungsmotors (100), enthaltend:
Leiten des Abgases in einen ersten Kanal (46a), der sich von einem Einlass (44) zu einem Auslass (42) erstreckt, wobei der erste Kanal (46a) eine erste Querschnittsfläche hat und sowohl am Einlass (44) als auch am Auslass (42) offen ist, wobei eine Querschnittsform des ersten Kanals (46a) im Wesentlichen rechteckig ist,
Durchlassen eines ersten Teils des Abgases in einen zweiten Kanal (46b), der sich neben dem ersten Kanal (46a) befindet und einen Einlass und einen Auslass aufweist, wobei der zweite Kanal (46b) am Einlass geschlossen und am Auslass offen ist und eine zweite Querschnittsfläche aufweist, die größer als die erste Querschnittsfläche ist, und eine Querschnittsform des zweiten Kanals (46b) im Wesentlichen achteckig ist,
Leiten des ersten Teils des Abgases aus dem Auslass des zweiten Kanals (46b), und
Leiten eines Teils des Abgases aus dem Auslass (42) des ersten Kanals (46a).

6. Verfahren nach Anspruch 5, wobei das Durchlassen eines ersten Teils das Durchlassen eines ersten Teils in den zweiten Kanal (46b) umfasst, der eine Breite aufweist, die etwa das 1,5-fache der Breite des ersten Kanals (46a) beträgt.

7. Verfahren nach Anspruch 5, wobei das Leiten eines Teils des Abgases das Leiten des Teils des Abgases aus einer Öffnung (52) an dem Auslass (42) des ersten Kanals (46a) umfasst.

## Revendications

1. Support filtrant (40) comprenant :
une pluralité de canaux (46) séparés par des parois latérales poreuses (50) s'étendant longitudinalement d'une première extrémité (44) à une seconde extrémité (42), la pluralité de canaux comprenant une pluralité de premiers canaux (46a) et une pluralité de seconds canaux (46b),
les premiers canaux (46a) étant ouverts à la fois à la première extrémité (44) et à la seconde extrémité (42) et ayant une première largeur,
les seconds canaux (46b) étant fermés à la première extrémité (44) et ouverts à la seconde extrémité (42) et ayant une seconde largeur supérieure à la première largeur,
la première largeur étant la largeur la plus grande de la coupe transversale des premiers canaux (46a) et la seconde largeur étant la largeur la plus grande de la coupe transversale des seconds canaux (46b), et
les premiers canaux (46a) ayant une forme en coupe transversale sensiblement rectangulaire et les seconds canaux (46b) ayant une forme en coupe transversale octagonale.

2. Support filtrant selon la revendication 1, dans lesquels chaque premier canal (46a) est adjacent à un second canal (46b) et séparé par la paroi latérale (50).

3. Support filtrant selon la revendication 1, dans lequel chaque premier canal (46a) comprend un orifice (52).

4. Support filtrant selon la revendication 1, dans lequel un rapport de la seconde largeur à la première largeur est supérieur à environ 1,5.

5. Procédé de filtration de gaz d'échappement (25) d'un moteur à combustion interne (100), comprenant les étapes consistant à:
diriger le gaz d'échappement dans un premier canal (46a) s'étendant d'une extrémité d'entrée (44) à une extrémité de sortie (42), le premier canal (46a) ayant une première surface en coupe transversale et étant ouvert à la fois à l'extrémité d'entrée (44) et à l'extrémité de sortie (42), dans lequel une forme en coupe transversale du premier canal (46a) est sensiblement rectangulaire,
faire passer une première portion du gaz d'échappement dans un second canal (46b), le second canal (46b) étant adjacent au premier canal (46a) et ayant une extrémité d'entrée et une extrémité de sortie, le second canal (46b) étant fermé à l'extrémité d'entrée et ouvert à l'extrémité de sortie et ayant une seconde surface en coupe transversale supérieure à la première surface en coupe transversale, dans lequel une forme en coupe transversale du second canal (46b) est sensiblement octagonal;
diriger la première portion du gaz d'échappement hors de l'extrémité de sortie du second canal (46b) ; et
diriger une portion du gaz d'échappement hors de l'extrémité de sortie (42) du premier canal (46a).

6. Procédé selon la revendication 5, dans lequel le passage d'une première portion comprend le passage d'une première portion dans le second canal (46b) ayant une largeur supérieure à environ 1,5 fois une largeur du premier canal (46a).

7. Procédé selon la revendication 5, dans lequel la direction d'une portion du gaz d'échappement comprend la direction de la portion de gaz d'échappement hors d'un orifice (52) à l'extrémité de sortie (42) du premier canal (46a).
